# EUROPÄISCHE PATENTSCHRIFT

(11) **EP 3 781 857 B1**
(45) Veröffentlichungstag und Bekanntmachung des Hinweises auf die Patenterteilung: **19.01.2022**
(21) Anmeldenummer: 18723062.8
(22) Anmeldetag: 16.04.2018
(51) Int. Cl.: F16L 37/22, F16L 37/44

(54) **KUPPLUNG UND VERFAHREN ZUM ÜBERTRAGEN VON FLUIDEN**
COUPLING AND METHOD FOR TRANSFERRING FLUIDS
RACCORD ET PROCÉDÉ DE TRANSMISSION DE FLUIDES

(43) Veröffentlichungstag der Anmeldung: 24.02.2021
(73) Patentinhaber: Weh GmbH, Verbindungstechnik, 89257 Illertissen (DE)
(72) Erfinder: MOERSCH, Nicola, 89186 Illerrieden (DE); MAYER, Raphael, 89269 Vöhringen (DE); MÜLLER, Stefan, 87727 Babenhausen (DE)
(74) Vertreter: Kirklies, Michael Dieter
(86) Internationale Anmeldenummer: PCT/IB2018/052634
(87) Internationale Veröffentlichungsnummer: WO 2019/202360

(56) Entgegenhaltungen:
- EP-A1- 2 273 177
- DE-A1-102004 014 461
- DE-B4-112005 002 696
- FR-A1- 2 686 680
- US-A1- 2014 264 118
- US-A1- 2015 377 398

## Beschreibung

### Stand der Technik

Die Erfindung betrifft das technische Gebiet der Betankungstechnik und insbesondere eine Kupplung zum Übertragen von Fluiden nach Anspruch 1, ein Verfahren zum Übertragen von Fluiden nach Anspruch 19 und eine bevorzugte Verwendung dieser Kupplung nach Anspruch 22.

Bei der Wasserstoffbetankung von Brennstoffzellenfahrzeugen wird das Fahrzeug über eine Füllkupplung und einen daran anschließenden Schlauch mit dem Dispenser einer Tankstelle verbunden. Dabei muss sichergestellt sein, dass bei nicht oder nicht richtig angeschlossener Kupplung an das fahrzeugseitige Betankungsventil im Fall einer Druck beaufschlagten Kupplung kein Medium austreten kann. Des Weiteren ist zu verhindern, dass die Kupplung bei nicht korrektem Anschließen an den Betankungsventil im Fall einer Druckbeaufschlagung nicht von diesem abspringt. Außerdem darf ein Abschließen der Tankkupplung bei einem anstehenden Innendruck größer als einem niedrigen, zulässigen Restdruck nicht möglich sein.

Die Patentanmeldung US 2015/0377398 A1 offenbart ein Kupplungselement mit einem Ventilelement, das einen Fluidkanal öffnet und schließt, und mit einem Indikatorelement, das einen Öffnungs- oder Schließzustand des Ventilelements durch ein Fenster von außen erkennen lässt.

Die Patentanmeldung EP 2 273 177 A1 offenbart Rohrkupplungselemente, die für die Handhabung von Hochdruckfluiden, wie z. B. gasförmigem Wasserstoff, geeignet sind. Insbesondere bezieht sich die Anmeldung auf ein weibliches Kupplungselement und ein männliches Kupplungselement.

### Aufgabe der Erfindung

Es ist eine Aufgabe der Erfindung, eine gleichsam zuverlässig wie dichtsicher anzuschließende und für einen Nutzer dennoch besonders einfach zu handhabende Kupplung zum Übertragen von Fluiden bereitzustellen.

### Lösung der Aufgabe

Diese Aufgabe wird gelöst durch eine Kupplung zur Übertragung von Fluiden mit einem zentralen Fluidkanal und einem darin angeordneten Ventil, dessen Ventilstößel mit einer in Strömungsrichtung des Fluides federkraftvorgespannten Ventilhülse bewegungsgekoppelt ist, und mit einem Verriegelungsmechanismus zum lösbaren Verriegeln der Kupplung an einem Tanknippel, und einem Sicherungsmechanismus zum lösbaren Sperren des geschlossenen Ventils, wobei der Verriegelungsmechanismus und der Sicherungsmechanismus über eine entgegen der Strömungsrichtung des Fluides federkraftvorgespannte Schiebehülse bewegungsgekoppelt sind, so dass in einer ersten Steuerstellung der Schiebehülse der Verriegelungsmechanismus entriegelt und das Ventil geschlossen, und in einer zweiten Steuerstellung der Schiebehülse der Sicherungsmechanismus die Ventilhülse entriegelt, so dass das Ventil entsperrt und wenigstens teilweise geöffnet ist, und die Ventilhülse entgegen der Strömungsrichtung des Fluides druckbeaufschlagt bewegbar ist, wobei der Sicherungsmechanismus die Schiebehülse verriegelt und das Ventil öffnet. Durch die zunächst wenigstens teilweise Öffnung des Ventils ist gewährleistet, dass die Kupplung auslassseitig durch die Tanksäule beziehungsweise den Dispenser komplett entlüftet werden kann.

Ein wesentlicher Punkt der erfindungsgemäßen Kupplung besteht dabei darin, dass diese zum Anschließen nur auf einen Tanknippel aufgeschoben werden muss und dann automatisch einrastet. Zum Abschließen ist nur ein Ziehen an einem Hebel erforderlich. Durch die Kombination bestehend aus einem bewegungsgekoppelten Verriegelungsmechanismus und einem druckunterstützten Sicherungsmechanismus wird gewährleistet, dass die Kupplung beim Aufstecken auf einen Tanknippel automatisch an diesem verriegelt. Zusätzlich verhindern diese bei einer Druckbeaufschlagung, dass die Kupplung vom Betankungsnippel gelöst und erst bei einem Wiederunterschreiten eines niedrigen, zulässigen Restdruckes von diesem gelöst werden kann. Dadurch ist eine gleichsam zuverlässiges und dichtsicheres An- und Abschließen der Kupplung gegeben. Gerade die funktionelle Integration von Verrieglungs- und Sicherungsmechanismus über die Schiebehülse lässt dabei eine besonders einfache Handhabung der Kupplung durch den Nutzer zu.

### Bevorzugte Ausführungsformen

Bevorzugte Ausführungsformen der vorliegenden Erfindung sind in den jeweiligen Unteransprüchen angegeben.

In der erfindungsgemäßen Kupplung ist es vorgesehen, dass der Verrieglungsmechanismus eine in Strömungsrichtung des Fluides federkraftvorgespannte Verriegelungshülse, radial zum zentralen Fluidkanal beweglich angeordnete Verriegelungselemente sowie einen Sperrmechanismus zum lösbaren Blockieren der Schiebehülse umfasst, wobei der Sperrmechanismus, die Schiebehülse und die Verriegelungselemente über die Verriegelungshülse so miteinander bewegungsgekoppelt sind, dass in einer ersten Hubstellung der Verriegelungshülse die Schiebehülse in ihrer ersten Steuerstellung blockiert ist, wobei die Verriegelungselemente in einer äußeren Radialposition gehalten werden, und in einer zweiten Hubstellung der Verriegelungshülse die Schiebehülse freigegeben ist und in ihrer zweiten Steuerstellung steht, wobei die Verriegelungselemente durch die Schiebehülse in eine innere Radialposition gedrückt und dort gehalten sind. Die funktionelle Integration von Verriegelungs- und Sperrmechanismus über die tanknippelbewegte Verriegelungshülse trägt dabei ebenso zu einer einfachen, zuverlässigen Handhabung der Kupplung durch den Nutzer bei.

In der erfindungsgemäßen Kupplung ist es dabei vorgesehen, dass der Sperrmechanismus wenigstens eine Kugel umfasst, die wechselseitig in entsprechende Nuten entweder an der Schiebhülse oder der Verriegelungshülse eingreifen kann. Damit ist eine besonders einfache und zuverlässige konstruktive Lösung für den Eingriff der Kugel in Schiebehülse und Verriegelungshülse geschaffen, die je nach Hubstellung der Verriegelungshülse eine Freigabe oder Blockade der Schiebehülse zulässt.

In einer bevorzugten Weiterbildung der erfindungsgemäßen Kupplung ist es vorgesehen, dass der Sperrmechanismus wenigstens eine Sperrnut umfasst, deren Tiefe so gewählt ist, dass der Hub der Schiebehülse zwischen der ersten und zweiten Steuerstellung blockiert ist. Bei Bewegung der Verriegelungshülse ohne einen Tanknippel rückt die wenigstens eine Kugel zunächst in diese Sicherungsnut ein. Da die Sicherungsnut eine zu geringe Tiefe aufweist und die Schiebehülse die wenigstens eine Kugel nicht passieren kann, wird die Schiebehülse von der wenigstens einen Kugel blockiert. Dadurch wird verhindert, dass die Schiebehülse entgegen der Strömungsrichtung des Fluides freigegeben und das Ventil geöffnet wird.

in einer weiteren bevorzugten weiterbildung dieser Ausführungsform ist es auch vorgesehen, dass die Verriegelungselemente als radial zum Fluidkanal angeordnete, kreisförmige Sperrsegmente ausgeführt sind, die eine besonders einfache und zuverlässige konstruktive Ausgestaltung des Verriegelungsmechanismus gestatten. Denn zum einen lassen sich die Sperrsegmente so ausgestalten, dass diese über einen besonders weiten Umfangsabschnitt hinweg den Tanknippel hintergreifen und so eine besonders stabile Verbindung zwischen der Kupplung und dem Tanknippel herstellen. Da diese Sperrsegmente allein durch Bewegung der Schiebehülse radial nach innen gedrückt werden, erübrigt sich zudem eine entsprechende Federvorspannung. Grundsätzlich ist es aber auch möglich, die Verriegelungselemente als einfache Radialstifte auszubilden, die in entsprechenden Bohrungen geführt sind, wenn dies die spezifischen Anforderungen an die Kupplung zulassen.

In einer weiteren bevorzugten Ausführungsform der erfindungsgemäßen Kupplung ist es vorgesehen, dass der Sicherungsmechanismus radial zum zentralen Fluidkanal beweglich angeordnete Sicherungselemente zum lösbaren Blockieren der Ventilhülse gegen Halteelemente umfasst, wobei die Sicherungselemente über die Schiebehülse und die Ventilhülse so miteinander bewegungsgekoppelt sind, dass in der ersten Steuerstellung der Schiebehülse die Sicherungselemente in einer inneren Radialposition an der Ventilhülse verrastet sind, und das geschlossene Ventil blockiert ist, und in der zweiten Steuerstellung der Schiebehülse die Sicherungselemente durch die Ventilhülse in eine äußere radiale Position gedrückt sind, in welcher die Ventilhülse freigegeben und das Ventil wenigstens teilweise geöffnet ist. Damit ist auf konstruktiv einfache und zuverlässige Weise eine vollständige Ventilöffnung erst dann gewährleistet, wenn die Kupplung sicher an einem Tanknippel angeschlossen ist.

In einer bevorzugten Weiterbildung dieser Ausführungsform ist es dabei vorgesehen, dass die Ventilhülse wenigstens eine umlaufende Stufe zum Verrasten der Sicherungselemente aufweist, wodurch auch bei einer potentiellen Drehung der Ventilhülse um ihre Längsachse stets ein zuverlässiger Eingriff der Sicherungselemente gewährleistet ist. Insbesondere erübrigt sich dadurch auch eine entsprechende Axialführung der Ventilhülse.

In einer weiteren bevorzugten Weiterbildung dieser Ausführungsform ist es zudem vorgesehen, dass die Schiebehülse über wenigstens einen axial zum zentralen Fluidkanal geführten Steuerstift mit der Ventilhülse bewegungsgekoppelt ist. In einer zuvor festgelegten Steuerstellung nimmt die Schiebehülse dabei den Steuerstift mit, der wiederum die Ventilhülse entgegen ihrer Federvorspannung bewegt und dabei die Sicherungselemente radial nach außen in eine Aufnahme der Schiebehülse wegdrückt. Dadurch ist eine besonders einfache Ansteuerung des Sicherungsmechanismus möglich.

In einer noch weiteren bevorzugten Weiterbildung dieser Ausführungsform ist es auch vorgesehen, dass die Länge des axial zum zentralen Fluidkanal geführten Steuerstifts so bemessen ist, dass zum Verriegeln des Verriegelungsmechanismus und zum anschließenden Entsperren des Sicherungsmechanismus eine Versatzstrecke überwunden werden muss, bevor das Ventil (30) wenigstens teilweise öffnet. Die Ventilhülse wird dabei um diese Versatzstrecke entgegen ihrer Federvorspannung so weit bewegt, so dass sich der damit bewegungsgekoppelte Ventilstößel von einem Dichtkolben abheben kann und das Ventil wenigstens teilweise öffnet. Dadurch ist eine erhöhte Sicherheit gegen eine sofortige vollständige Ventilöffnung gegeben, die erst bei Druckbeaufschlagung erfolgen kann.

In einer noch weiteren bevorzugten Weiterbildung dieser Ausführungsform ist es auch vorgesehen, dass der wenigstens eine axial zum Fluidkanal geführte Steuerstift über eine ringförmige Druckscheibe gegen die Ventilhülse anliegt. Dadurch entsteht eine größere Angriffsfläche für den Steuerstift, die zudem eine gleichmäßigere Druckverteilung über den Umfang der Ventilhülse hinweg gewährleistet. Auf Grund der umlaufenden Druckscheibe ist auch wiederum keine Axialführung der Ventilhülse erforderlich, welche diese stets exakt gegen den Steuerstift positioniert.

In einer weiteren bevorzugten Ausführungsform der erfindungsgemäßen Kupplung ist es vorgesehen, dass das Ventil so gestaltet ist, dass dessen Öffnungsweite abhängig von einer Druckänderung des Fluides änderbar ist. Diese druckabhängige Öffnungsweite stellt sicher, dass das Ventil erst bei vollständig aufgebautem Fülldruck ganz geöffnet wird, bei abnehmendem Fülldruck oder bei Restdruck aber wieder in seine nur teilweise geöffnete Stellung zurückfällt.

In einer weiteren bevorzugten Ausführungsform der erfindungsgemäßen Kupplung ist es vorgesehen, dass eine Federvorspannung der Ventilhülse so gewählt ist, dass das Ventil erst bei Unterschreiten eines Fluiddrucks, durch Bewegen der Ventilhülse und der Schiebehülse, geschlossen und gesperrt werden kann. Dadurch ist ein Abschließen der Kupplung von einem Tanknippel erst bei Erreichen eines Restdrucks möglich, was den unerwünschten Austritt eines Fluides beim Abschließen der Kupplung von einem Tanknippel sicher ausschließt.

In einer weiteren bevorzugten Ausführungsform der erfindungsgemäßen Kupplung ist es vorgesehen, dass eine Federvorspannung der Ventilhülse so gewählt ist, dass das Ventil erst bei Überschreiten eines Fluiddrucks, durch Bewegen der Ventilhülse und der Schiebehülse, vollständig geöffnet werden kann, und dabei die Schiebehülse blockiert. Insbesondere ist es dabei vorgesehen, dass ein Öffnen des Ventils erst bei Überschreitung eines Fülldrucks von 5 bar erfolgen kann, wodurch eine zusätzliche Sicherheit gegen instabile Füllverhältnisse oder eine noch nicht vollständig entlüftete Kupplung gegeben ist.

In einer weiteren bevorzugten Ausführungsform der erfindungsgemäßen Kupplung ist es vorgesehen, dass das Ventil so gestaltet ist, dass dessen Öffnungsweite ab einem definierten Fluiddruck fest ist, womit ebenfalls instabile Füllverhältnisse ausgeschlossen und insbesondere keine undefinierte Fluidübertragung bei Überdruck eintreten kann.

In einer weiteren bevorzugten Ausführungsform der erfindungsgemäßen Kupplung ist eine Handhebelmechanik vorgesehen, mittels derer sich die Schiebehülse zum Abkoppeln der Kupplung von einem Tanknippel aus der zweiten Stellung in die erste Stellung verfahren lässt. Damit ist zum sicheren und zuverlässigen Anschließen der Kupplung an einem Tanknippel lediglich deren Aufschieben und zum Abschließen der Kupplung lediglich eine einzige Entkopplungsbetätigung notwendig, was eine Handhabung der Kupplung - trotz hoher Fülldrücke beispielsweise eines gasförmigen Fluides - für den Nutzer äußerst einfach macht.

In einer weiteren bevorzugten Ausführungsform der erfindungsgemäßen Kupplung ist eine Datenschnittstelle, insbesondere eine manuell austauschbare Datenschnittstelle zum Bereitstellen von Betankungsinformation vorgesehen. Eine solche, idealerweise auf Infrarot-Basis arbeitende Datenschnittstelle befindet sich bevorzugt am vorderen Ende der Kupplung und ist für die Kommunikation zwischen einem Fahrzeug und einer Tankstelle und zur Erreichung eines optimalen Füllgrads zuständig. Bei einer Beschädigung oder Funktionsstörung musste bislang die komplette Kupplung zur Reparatur eingeschickt werden. Die austauschbare Datenschnittstelle kann jedoch direkt vor Ort einfach und in kürzester Zeit ausgetauscht werden, so dass sich Ausfallzeiten verkürzen.

In einer weiteren bevorzugten Ausführungsform der erfindungsgemäßen Kupplung ist ein LED-Display, vorzugsweise ein OLED-Farbdisplay zum Anzeigen von Betankungsinformation, insbesondere einen Ablauf des Betankungsvorgangs betreffend, vorgesehen. Der Nutzer kann so daran ablesen, was als nächstes zu tun ist, was den Betankungsvorgang erleichtert und gleichzeitig dessen Sicherheit erhöht. Das Display ist idealerweise recht lichtstark ausgelegt und weist einen großen Betrachtungswinkel auf. Das Display muss dabei keinen Einfluss auf die mechanischen Funktionen der Kupplung haben, so dass ein Anschließen, Betanken und Abschließen der Kupplung auch ohne Display möglich ist. Damit kann die Kupplung insbesondere auch mit einem beschädigten Display betrieben werden, so dass ein Tanken weiterhin möglich ist.

In einer weiteren bevorzugten Ausführungsform der erfindungsgemäßen Kupplung ist an der Kupplung selbst ein Startknopf zum Signalisieren einer Betankungsstartanforderung an einen Dispenser vorgesehen. Damit kann der Betankungsvorgang nach dem Anschließen der Kupplung direkt an der Kupplung gestartet werden. Der Startknopf umfasst dabei lediglich eine Startfunktion, während ein automatisches Stoppen bei vollem Tank tankstellenseitig vorgenommen wird, beispielsweise bei einem Tanken für einen vorab fest eingestellten Geldbetrag.

In einer weiteren bevorzugten Ausführungsform der erfindungsgemäßen Kupplung ist ein Griffbereich kälteisoliert und vorzugsweise mit einer Vakuumisolierung ausgeführt. Damit weist dieser jederzeit eine angenehme Temperatur zum Halten der Kupplung auf, was durch eine im Griffbereich verbaute Vakuumisolierung am Besten gewährleistet ist.

In einer weiteren bevorzugten Ausführungsform der erfindungsgemäßen Kupplung ist die komplette Mechanik von einer durchgängigen Kunststoffhülle aus einem witterungsbeständigen Material abgedeckt, so dass Klemm- und Quetschverletzungen an den Fingern / Händen eines Nutzers sicher vermieden werden.

Die vorstehende Aufgabe wird auch gelöst durch ein Verfahren zum Übertragen von Fluiden mit einer Kupplung nach einem der Ansprüche 1 bis 18, bei dem in einer ersten Steuerstellung der Schiebehülse der Verriegelungsmechanismus entriegelt und das Ventil geschlossen sind, und beim Übergang in eine zweite Steuerstellung der Schiebehülse der Sicherungsmechanismus die Ventilhülse entriegelt, so dass das Ventil entsperrt und wenigstens teilweise geöffnet wird, und die Ventilhülse druckbeaufschlagt entgegen der Strömungsrichtung des Fluides bewegt wird, wobei der Sicherungsmechanismus die Schiebehülse verriegelt und das Ventil vollständig geöffnet wird.

Ein wesentlicher Punkt des erfindungsgemäßen Verfahrens besteht dabei darin, dass die funktionelle Integration der unterschiedlichen Komponenten ein deutlich vereinfachtes An- und Abschließen der Kupplung von einem Tanknippel erlaubt. Neben einer verbesserten Handhabbarkeit der Kupplung durch den Nutzer entsteht aber auch zusätzlich eine erheblich erhöhte Sicherheit und Zuverlässigkeit gegen falsches Anschließen, instabile Füllverhältnisse beim Betanken und unerwünschten Fluidaustritt beim Abschließen der Kupplung. Dabei spielt insbesondere die funktionelle Integration des Verriegelungs- und Sicherheitsmechanismus über die Schiebehülle eine Rolle, die das Verfahren erheblich vereinfacht und gegen Störungen oder auch Falschbenutzung unanfällig macht.

Im erfindungsgemäßen Verfahren ist es vorgesehen, dass zum Entkoppeln der Kupplung von einem Tanknippel der Druck des Fluides abgesenkt wird, die Ventilhülse federkraftgetrieben einen Fülldruck des Fluides überwindet und die Ventilhülse und die Schiebehülse dann über eine Handhebelmechanik in Strömungsrichtung des Fluides verschoben werden, wobei das Ventil schließt, der Sicherungsmechanismus die Ventilhülse blockiert und die Schiebehülse freigibt, und die Schiebehülse dann in ihre erste Stellung verfahren wird. Durch die Festlegung einer Federkraft der Ventilhülsenfeder 37 wird sichergestellt, dass ein Abschließen der Kupplung von einem Tanknippel erst bei Unterschreiten eines zuvor festgelegten Restdrucks, genauso wie ein Öffnen des Ventils erst bei Überschreiten eines Fülldrucks, insbesondere eines Fülldrucks bis 5 bar, erfolgen kann. Das Verfahren zum An- und Abschließen der Kupplung von einem Tanknippel wird dadurch erheblich zuverlässiger und sicherer.

In einer bevorzugten Ausführungsform des erfindungsgemäßen Verfahrens ist es vorgesehen, dass an einem LED-Display der Kupplung ein Ablauf des Betankungsvorgangs dargestellt wird, womit ein Nutzer der Kupplung sicher durch den Betankungsvorgang geleitet wird.

In einer weiteren bevorzugten Ausführungsform des erfindungsgemäßen Verfahrens ist es vorgesehen, dass über einen Startknopf der Kupplung eine Betankungsstartanforderung an einen Dispenser versendet wird. Damit kann ein Nutzer der Kupplung den gesamten Betankungsvorgang von der Kupplung aussteuern, was diesen erheblich einfacher, schneller und zudem sicherer macht.

Auf Grund der besonders einfachen Handhabbarkeit wie auch Zuverlässigkeit und Sicherheit der erfindungsgemäßen Kupplung soll diese bevorzugt zum Betanken von Fahrzeugen mit gasförmigen Fluiden, insbesondere mit Wasserstoff eingesetzt werden.

### Kurze Beschreibung der Figuren

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen:

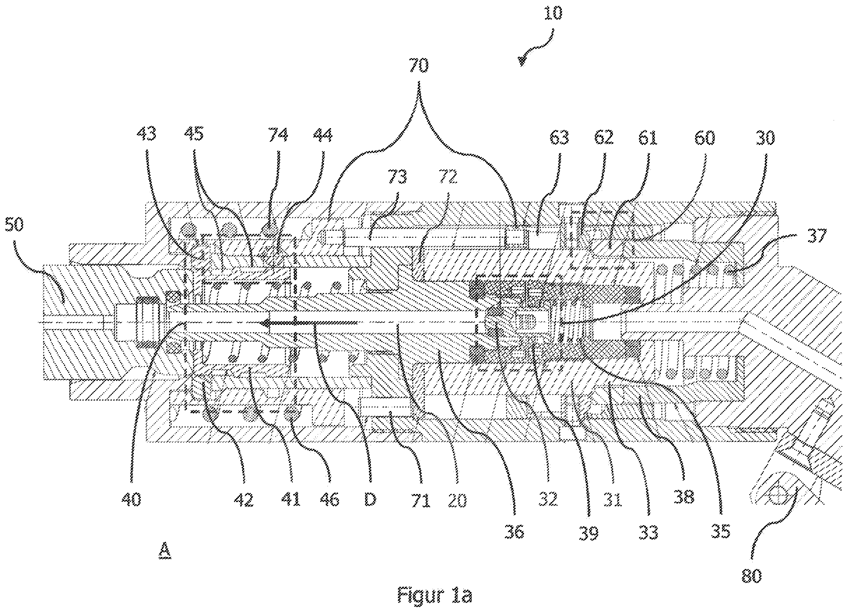

- Figur 1a: eine längsgeschnittene Seitenansicht einer erfindungsgemäßen Kupplung, die an einem Tanknippel aufgesetzt ist;

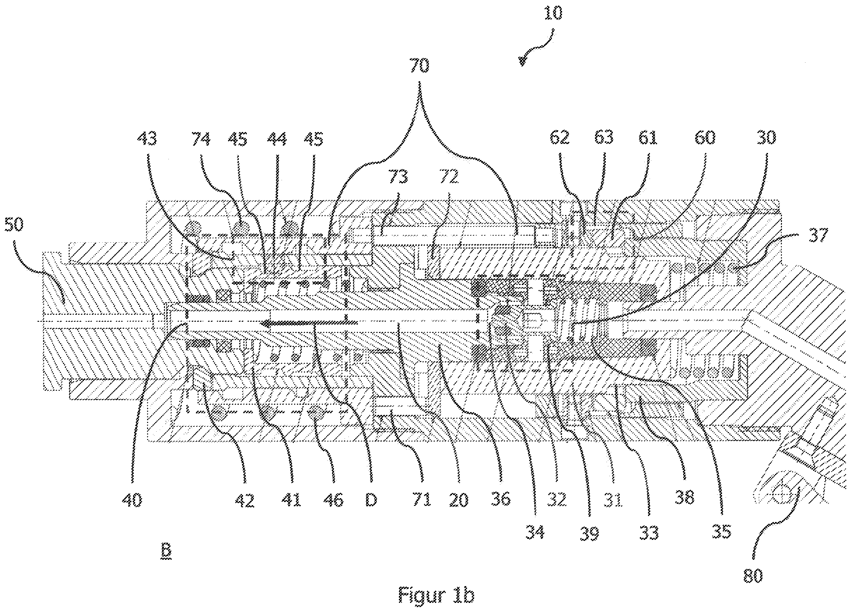

- Figur 1b: die längsgeschnittene Seitenansicht der erfindungsgemäßen Kupplung der Figur 1a, die an dem Tanknippel verriegelt ist, und

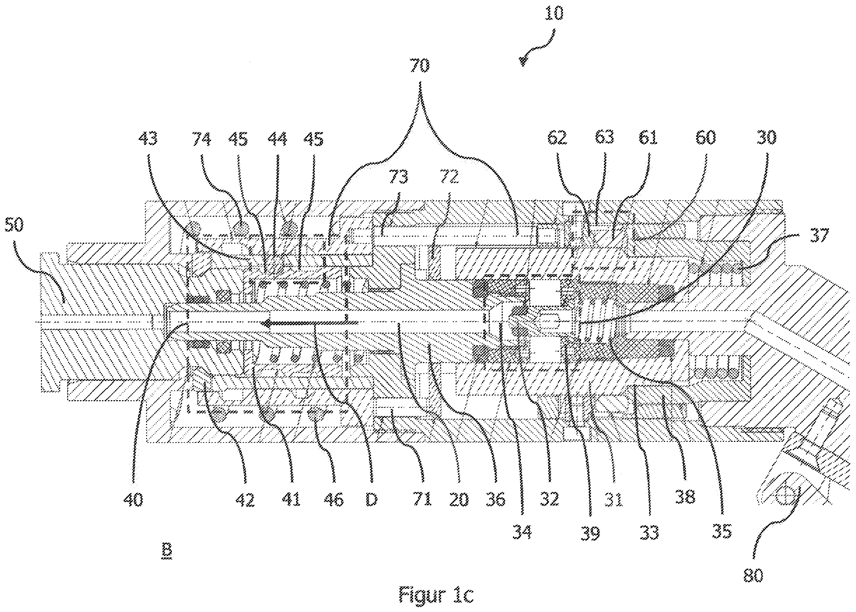

- Figur 1c: die längsgeschnittene Seitenansicht der erfindungsgemäßen Kupplung der Figur 1b, bei der das Ventil vollständig geöffnet ist.

Figur 1a zeigt eine längsgeschnittene Seitenansicht einer erfindungsgemäßen Kupplung 10, die an einem Tanknippel 50 aufgesetzt ist. Diese weist einen Fluidkanal 20 mit einem darin angeordneten Ventil 30 auf, und wird über einen Verriegelungsmechanismus 40 an dem Tanknippel 50 angeschlossen. Über einen Sicherungsmechanismus 60 kann das Ventil 30 entsperrt und der Verriegelungsmechanismus blockiert werden. Beim Anschließen der Kupplung 10 wird dazu eine Verriegelungshülse 41, welche Verriegelungselemente 42 in geöffneter Stellung hält, von dem Betankungsnippel 50 zurückgeschoben, bis sich die Verriegelungselemente 42 an einem Einstich des Betankungsnippels 50 radial nach innen bewegen. Die Verriegelungselemente 42 werden dabei durch eine Schräge an einer Schiebehülse 70, die durch eine Schiebenhülsenfeder 74 vorgespannt ist, nach innen gedrückt. Die Schiebehülse 70 besteht aus zwei Teilhülsen, die über Schiebestifte 73 miteinander verbunden sind. Beide Teilhülsen bewegen sich in der Folge aus der hier gezeigten Steuerstellung A der Schiebehülse 70 von dem Tanknippel 50 weg. Zusätzlich werden ab einem bestimmten Hub der Schiebehülse 70 eine Druckscheibe 72 und somit auch die Ventilhülse 31 mittels Steuerstiften 71 vom Tanknippel 50 wegbewegt. Dadurch wird der Sicherungsmechanismus 60 aktiviert, dessen Sicherungselemente 61 radial nach außen in eine Aufnahmenut 63 der Schiebehülse 70 gedrängt werden. In der Folge wird der Ventilstößel 32 durch eine in der Ventilhülse 31 montierte Nutschraube mitgenommen, wodurch der Fluidkanal 20 geöffnet wird. Das Öffnen des Fluidkanals 20 erfolgt erst, nachdem der Tanknippel 50 sicher mit der Kupplung 10 verbunden ist. Bei einer Druckbeaufschlagung wird die Ventilhülse 31, welche durch die Ventilhülsenfeder 37 vorgespannt ist, entgegen einer Strömungsrichtung D des Fluides verschoben. Durch diese Federvorspannung wird sichergestellt, dass die Kupplung 10 erst ab einem niedrigen, zulässigen Restdruck von dem Tanknippel 50 gelöst werden kann. Durch das Verschieben der Ventilhülse 31 wird die Öffnung zwischen der Ventilhülse 31 und einer Flanschhülse 38 geschlossen und blockiert mittels Halteelementen 62 und Sicherungselementen 61 ein Verschieben der Schiebehülse 70 und dadurch auch das Entriegeln der Kupplung 10 vom Tanknippel 50. Erst, wenn die Druckbeaufschlagung den niedrigen, zulässigen Restdruck wieder unterschritten hat, kann die Kupplung 10 wieder von dem Tanknippel 50 gelöst werden.

Figur 1b zeigt die längsgeschnittene Seitenansicht der erfindungsgemäßen Kupplung 10 der Figur 1a, die an dem Tanknippel 50 verriegelt ist. Dabei hat der Nutzer die Kupplung 10 so auf den Tanknippel 50 gedrückt, dass dieser die Verriegelungshülse 41 entgegen ihrer Federvorspannung verschoben hat. In der Folge drückt die Verriegelungshülse 41 eine Verriegelungshülsenfeder 46 zusammen und aktiviert einen Sperrmechanismus 43, dessen Kugeln 44 radial in Nuten 45, 46 der Verriegelungshülse 41 fallen. Dadurch wird die Schiebehülse 70 freigegeben und durch die Schiebehülsenfeder 74 in die hier gezeigte zweite Steuerstellung B verschoben. Die weniger tiefe Sperrnut 45 dient dabei als Sicherungsgut gegen ein Verschieben der Verriegelungshülse 31, wenn kein Tanknippel 50 eingeführt ist. Die Schiebestifte 73 übertragen die beschriebene Bewegung der Schiebehülse 70 von deren linker Teilhülse auf deren rechte Teilhülse. Bei dieser Bewegung kontaktiert die linke Teilhälfte der Schiebehülse 70 auf ungefähr 50% ihres Weges Steuerstifte 71, welche deren Bewegung auf eine Druckscheibe 72 übertragen, wodurch wiederum die Ventilhülse 31 verschoben wird. Zusammen mit der Flanschhülse 38 leitet die Ventilhülse 31 dadurch die Bewegung der Sicherungselemente 61 aus ihrer Rastlage an einer Stufe 33 der Ventilhülse 31 ein, so dass diese radial nach außen in eine Aufnahmenut 63 der Schiebehülse 70 gedrängt werden. Die Ventilhülse 31 verschiebt dabei auch eine Nutschraube 39, welche in die Ventilhülse 31 eingeschraubt ist und den Ventilstößel 32 von einem Dichtkolben 36 abhebt, so dass eine erste Öffnungsweite 34 des Ventils 30 erreicht wird. Erst wenn die Kupplung 10 derart angeschlossen ist und unter einem Fülldruck von über 7 bar steht, wird eine Aufnahmenut 63, in der sich die Sicherungselemente 61 in der zweiten Steuerstellung B der Schiebehülse 70 befinden, durch Bewegung der Ventilhülse 31 entgegen der Strömungsrichtung D des Fluides geschlossen. Durch das Schließen der Aufnahmenut 63 können die Sicherungselemente 61 nicht mehr durch die Schiebehülse 70 radial nach innen verschoben werden und blockieren somit zusammen mit den Halteelementen 62 die Schiebehülse 70, da letztere mit dem Gehäuse der Kupplung 10 verschraubt sind.

Figur 1c zeigt die längsgeschnittene Seitenansicht der erfindungsgemäßen Kupplung 10 der Figur 1b, bei der das Ventil 30 vollständig geöffnet ist und eine Übertragung des Fluides stattfindet. Der Nutzer hat dabei den Tankvorgang eingeleitet, wodurch der aufgebaute Druck die Ventilhülse 31 entgegen ihrer Ventilhülsenfeder 37 verschoben hat. Die Ventilhülse drückt dabei die Ventilhülsenfeder 37 zusammen und verschiebt die Nutschraube, die wiederum den Ventilstößel 32 verschiebt und das Ventil 30 vollständig öffnet, so dass dessen maximale Öffnungsweite 34 genutzt wird. Die Schiebehülse 70 befindet sich hier nach wie von in ihrer Steuerstellung B. Die Festigkeit der Kupplung 10 ist dabei mit einem rechnerischen Druck von 1050 bar ausgelegt, so dass auch ein unerwarteter Druckanstieg in einer Tankstelle keine Gefahr für die Kupplung 10 darstellen kann. Dabei weist die Kupplung 10 auch eine höhere Durchflussrate auf als herkömmliche Kupplungen, wodurch die Betankungszeit sinkt. Insgesamt wurde die Kupplung 10 für eine hohe Taktfrequenz, das heißt die Betankung mehrerer Fahrzeuge in kurzer Zeit nacheinander ausgelegt. Am Einlass der Kupplung 10 (in den Figuren nicht sichtbar) ist dafür auch ein Filter, insbesondere ein integrierter 5 × 10⁻⁶ m Mesh-Filter, in dem Fluidkanal 20 angeordnet, um die Kupplung 10 und auch nachgelagerte Systeme vor größeren Verunreinigungen zu schützen, der im Wartungsfall auch gewechselt werden kann.

Ist die Betankung abgeschlossen, wird die Kupplung 10 über den Dispenser einer Tankstelle entlüftet. Die Ventilhülsenfeder 37 verschiebt die Ventilhülse 31 wieder in Strömungsrichtung D des Fluides, wobei eine sich an der Ventilhülse 31 abstützende Ventilfeder 35 diese Bewegung auf den Ventilstößel 32 überträgt. Das Ventil 30 ist dann zu ungefähr 90 % geschlossen. Wenn die Kupplung 10 angeschlossen ist und nicht mehr unter Fülldruck steht, kann diese durch Betätigung einer Handhebelmechanik 80 entriegelt werden, da die Ventilhülse 31 die Nut, in welche die Sicherungselemente 61 beim Verriegeln verschoben wurden, nicht mehr schließt. Der Nutzer betätigt dann die Handhebelmechanik 80, welcher die Schiebehülse 70 nach links bewegt, die Ventilhülse 31 durch die Ventilhülsenfeder 37 mitbewegt und den Ventilstößel 32 mittels der Ventilfeder 35 auf den Dichtkolben 36 drückt. Das Ventil 30 ist damit geschlossen und die Sicherungselemente 61 bewegen sich wieder radial nach innen. Beide Teilhülsen der Schiebehülse 70 bewegen sich aus ihrer Steuerstellung B nach links zurück in ihre Steuerstellung A und der Nutzer zieht die Kupplung 10 von dem Tanknippel 50 ab, wobei sich die Verriegelungselemente 42 radial nach außen bewegen. Die Verriegelungshülse 41 wird dann durch die Verriegelungshülsenfeder 46 in Strömungsrichtung D des Fluides verschoben, wobei auch die Kugeln 44 radial nach außen bewegt werden und die Verriegelungselemente 42 wie auch die Kugeln 44 unter Blockierung der Schiebehülse 70 in ihrer ersten Steuerstellung sperrt.

In der Summe wird damit die Handhabung einer Kupplung, insbesondere bei Betankung mit unter hohem Druck stehenden gasförmigen Fluiden wie Wasserstoff deutlich vereinfacht, wobei zudem eine äußerst zuverlässige und sichere Betankung gewährleistet ist.

### Bezugszeichenliste

- 10: Kupplung
- 30: Ventil
- 31: Ventilhülse
- 32: Ventilstößel
- 33: Stufenförmige Nut
- 34: Öffnungsweite des Ventils
- 35: Ventilfeder
- 36: Dichtkolben
- 37: Ventilhülsenfeder
- 38: Flanschhülse
- 39: Nutschraube
- 40: Verriegelungsmechanismus
- 41: Verriegelungshülse
- 42: Verriegelungselemente
- 43: Sperrmechanismus
- 44: Kugel
- 45: Sperrnuten
- 46: Verriegelungshülsenfeder
- 50: Tanknippel
- 60: Sicherungsmechanismus
- 61: Sicherungselemente
- 62: Halteelemente
- 63: Aufnahmenut
- 70: Schiebehülse
- 71: Steuerstift
- 72: Druckscheibe
- 73: Schiebestift
- 74: Schiebehülsenfeder
- 80: Handhebelmechanik
- A: Erste Steuerstellung der Schiebehülse
- B: Zweite Steuerstellung der Schiebehülse

## Patentansprüche

1. Kupplung (10) zum Übertragen von Fluiden, mit einem zentralen Fluidkanal (20) und einem darin angeordneten Ventil (30), dessen Ventilstößel (32) mit einer in Strömungsrichtung (D) des Fluides federkraftvorgespannten Ventilhülse (31) bewegungsgekoppelt ist, und mit einem Verriegelungsmechanismus (40) zum lösbaren Verriegeln der Kupplung (10) an einem Tanknippel (50), und einem Sicherungsmechanismus (60) zum lösbaren Sperren des geschlossenen Ventils (30), wobei der Verriegelungsmechanismus (40) und der Sicherungsmechanismus (60) über eine entgegen der Strömungsrichtung (D) des Fluides federkraftvorgespannte Schiebehülse (70) bewegungsgekoppelt sind, so dass in einer ersten Steuerstellung (A) der Schiebehülse (70) der Verriegelungsmechanismus (60) entriegelt und das Ventil (30) geschlossen, und in einer zweiten Steuerstellung (B) der Schiebehülse (70) der Sicherungsmechanismus (60) die Ventilhülse (31) entriegelt, so dass das Ventil (30) entsperrt und wenigstens teilweise geöffnet ist, und die Ventilhülse (31) entgegen der Strömungsrichtung (D) des Fluides druckbeaufschlagt bewegbar ist, wobei der Sicherungsmechanismus (60) die Schiebehülse verriegelt und das Ventil (30) vollständig öffnet, und bei welcher der Verrieglungsmechanismus (40) eine in Strömungsrichtung (D) des Fluides federkraftvorgespannte Verriegelungshülse (41), radial zum zentralen Fluidkanal (20) beweglich angeordnete Verriegelungselemente (42) sowie einen Sperrmechanismus (43) zum lösbaren Blockieren der Schiebehülse (70) umfasst, wobei der Sperrmechanismus (43), die Schiebehülse (70) und die Verriegelungselemente (42) über die Verriegelungshülse (41) so miteinander bewegungsgekoppelt sind, dass in einer ersten Hubstellung der Verriegelungshülse (41) die Schiebehülse (70) in ihrer ersten Steuerstellung (A) blockiert ist, wobei die Verriegelungselemente (42) in einer äußeren Radialposition gehalten werden, und in einer zweiten Hubstellung der Verriegelungshülse (41) die Schiebehülse (70) freigegeben ist und in ihrer zweiten Steuerstellung (B) steht, wobei die Verriegelungselemente (42) durch die Schiebehülse (70) in eine innere Radialposition gedrückt und dort gehalten sind, und die Kupplung (10) **dadurch gekennzeichnet ist, dass** der Sperrmechanismus (43) wenigstens eine Kugel (44) umfasst, die wechselseitig in entsprechende Nuten (45) entweder an der Schiebhülse (70) oder der Verriegelungshülse (41) eingreifen kann.

2. Kupplung (10) nach Anspruch 1, bei welcher der Sperrmechanismus (43) wenigstens eine Nut (46) umfasst, deren Tiefe so gewählt ist, dass der Hub der Schiebehülse (70) zwischen der ersten und zweiten Steuerstellung (A, B) blockiert ist.

3. Kupplung (10) nach Anspruch 1 oder 2, bei welcher die Verriegelungselemente (42) als radial zum Fluidkanal (20) angeordnete, kreisförmige Sperrsegmente ausgeführt sind.

4. Kupplung (10) nach einem der vorstehenden Ansprüche, bei welcher der Sicherungsmechanismus (60) radial zum zentralen Fluidkanal (20) beweglich angeordnete Sicherungselemente (61) zum lösbaren Blockieren der Ventilhülse (31) gegen Halteelemente (62) umfasst, wobei die Sicherungselemente (61) über die Schiebehülse (70) und die Ventilhülse (31) so miteinander bewegungsgekoppelt sind, dass in der ersten Steuerstellung (A) der Schiebehülse (70) die Sicherungselemente (61) in einer inneren Radialposition an der Ventilhülse (31) verrastet sind, und das geschlossene Ventil (30) blockiert ist, und in der zweiten Steuerstellung (B) der Schiebehülse (70) die Sicherungselemente (61) durch die Ventilhülse (31) in eine äußere radiale Position gedrückt sind, in welcher die Ventilhülse (31) freigegeben und das Ventil (30) wenigstens teilweise geöffnet ist.

5. Kupplung (10) nach Anspruch 4, bei welcher die Ventilhülse (31) wenigstens eine umlaufende Stufe (33) zum Verrasten der Sicherungselemente (61) aufweist.

6. Kupplung (10) nach einem der vorstehenden Ansprüche, bei welcher die Schiebehülse (70) über wenigstens einen axial zum zentralen Fluidkanal (20) geführten Steuerstift (71) mit der Ventilhülse (31) bewegungsgekoppelt ist.

7. Kupplung (10) nach Anspruch 6, bei welcher die Länge des axial zum zentralen Fluidkanal (20) geführten Steuerstifts (71) so bemessen ist, dass zum Verriegeln des Verriegelungsmechanismus (40) und zum anschließenden Entsperren des Sicherungsmechanismus (60) eine Versatzstrecke überwunden werden muss, bevor das Ventil (30) wenigstens teilweise öffnet.

8. Kupplung (10) nach Anspruch 6 oder 7, bei welcher der wenigstens eine axial zum Fluidkanal (20) geführte Steuerstift (71) über eine ringförmige Druckscheibe (72) gegen die Ventilhülse (31) anliegt.

9. Kupplung (10) nach einem der vorstehenden Ansprüche, bei welcher das Ventil (30) so gestaltet ist, dass dessen Öffnungsweite (34) abhängig von einer Druckänderung des Fluides änderbar ist, so dass das Ventil erst bei vollständig aufgebautem Fülldruck ganz geöffnet wird, bei abnehmendem Fülldruck oder bei Restdruck aber wieder in seine nur teilweise geöffnete Stellung zurückfällt.

10. Kupplung (10) nach einem der vorstehenden Ansprüche, bei welcher eine Federvorspannung der Ventilhülse (31) so gewählt ist, dass das Ventil (30) erst bei Unterschreiten eines Fluiddrucks, durch Bewegen der Ventilhülse (31) und der Schiebehülse (70), geschlossen und gesperrt werden kann.

11. Kupplung (10) nach einem der vorstehenden Ansprüche, bei welcher eine Federvorspannung der Ventilhülse (31) so gewählt ist, dass das Ventil (30) erst bei Überschreiten eines Fluiddrucks, durch Bewegen der Ventilhülse (31) und der Schiebehülse (70), vollständig geöffnet werden kann, und dabei die Schiebehülse (70) blockiert.

12. Kupplung (10) nach einem der vorstehenden Ansprüche, bei welcher das Ventil (30) so gestaltet ist, dass dessen Öffnungsweite (34) ab einem definierten Fluiddruck fest ist.

13. Kupplung (10) nach einem der vorstehenden Ansprüche, bei welcher eine Handhebelmechanik (80) vorgesehen ist, mittels derer sich die Schiebehülse (70) zum Abkoppeln der Kupplung (10) von einem Tanknippel (50) aus der zweiten Stellung (B) in die erste Stellung (A) verfahren lässt.

14. Kupplung (10) nach einem der vorstehenden Ansprüche, bei welcher eine Datenschnittstelle, insbesondere eine manuell austauschbare Datenschnittstelle zum Bereitstellen von Betankungsinformation vorgesehen ist.

15. Kupplung (10) nach einem der vorstehenden Ansprüche, bei welcher ein LED-Display, vorzugsweise ein OLED-Farbdisplay zum Anzeigen von Betankungsinformation, insbesondere einen Ablauf des Betankungsvorgangs betreffend, vorgesehen ist.

16. Kupplung (10) nach einem der vorstehenden Ansprüche, bei welcher an der Kupplung (10) selbst ein Startknopf zum Signalisieren einer Betankungsstartanforderung an einen Dispenser vorgesehen ist.

17. Kupplung (10) nach einem der vorstehenden Ansprüche, bei welcher ein Griffbereich kälteisoliert und vorzugsweise mit einer Vakuumisolierung ausgeführt ist.

18. Kupplung (10) nach einem der vorstehenden Ansprüche, bei welcher die komplette Mechanik von einer durchgängigen Kunststoffhülle aus einem witterungsbeständigen Material abgedeckt ist.

19. Verfahren zum Übertragen von Fluiden mit einer Kupplung nach einem der vorstehenden Ansprüche, bei dem in einer ersten Steuerstellung (A) der Schiebehülse (70) der Verriegelungsmechanismus (40) entriegelt und das Ventil (30) geschlossen sind, und beim Übergang in eine zweite Steuerstellung (B) der Schiebehülse (70) der Sicherungsmechanismus (60) die Ventilhülse (31) entriegelt, so dass das Ventil (30) entsperrt und wenigstens teilweise geöffnet wird, und die Ventilhülse (31) druckbeaufschlagt entgegen der Strömungsrichtung des Fluids bewegt wird, wobei der Sicherungsmechanismus (60) die Schiebehülse (70) verriegelt und das Ventil (30) vollständig öffnet, **dadurch gekennzeichnet, dass** zum Entkoppeln der Kupplung (10) von einem Tanknippel (50) der Druck des Fluides abgesenkt wird, die Ventilhülse (31) federkraftgetrieben einen Fülldruck des Fluides überwindet und die Ventilhülse (31) und die Schiebehülse (70) dann über eine Handhebelmechanik (80) in Strömungsrichtung (D) des Fluides verschoben werden, wobei das Ventil (30) schließt, der Sicherungsmechanismus (60) die Ventilhülse (31) blockiert und die Schiebehülse (70) freigibt, und die Schiebehülse (70) dann in ihre erste Stellung (A) verfahren wird.

20. Verfahren nach Anspruch 19, bei dem an einem LED-Display der Kupplung (10) ein Ablauf des Betankungsvorgangs dargestellt wird.

21. Verfahren nach einem der Ansprüche 19 oder 20, bei dem über einen Startknopf der Kupplung (10) eine Betankungsstartanforderung an einen Dispenser versendet wird.

22. Verwendung einer Kupplung (10) nach einem der Ansprüche 1 bis 18 zum Betanken von Fahrzeugen mit gasförmigen Fluiden, insbesondere mit Wasserstoff.

## Claims

1. Coupling (10) for transmitting fluids, having a central fluid channel (20) and a valve (30) arranged therein, whose tappet (32) is movement-coupled with a valve sleeve (31) preloaded by spring force in the direction of flow (D) of the fluid, and with a locking mechanism (40) for releasably locking the coupling (10) at a tank fitting (50), and a securing mechanism (60) for releasably latching the closed valve (30), wherein the locking mechanism (40) and the securing mechanism (60) are movement-coupled via a sliding sleeve (70) preloaded against the direction of flow (D) of the fluid by spring force, so that in a first control position (A) of the sliding sleeve (70), the locking mechanism (60) is unlocked and the valve (30) closed, and in a second control position (B) of the sliding sleeve (70), the securing mechanism (60) unlocks the valve sleeve (31), so that the valve (30) is unlatched and at least partially opened, and the valve sleeve (31) is movable against the direction of flow (D) of the fluid by pressurization, wherein the securing mechanism (60) locks the sliding sleeve and opens the valve (30) completely, and in which the locking mechanism (40) comprises a locking sleeve (41) preloaded by spring force in the direction of flow (D) of the fluid, locking elements (42) arranged to be movable radially to the central fluid channel (20), and a latching mechanism (43) for releasably blocking the sliding sleeve (70), wherein the latching mechanism (43), the sliding sleeve (70), and the locking elements (42) are movement-coupled with each other via the locking sleeve (41), such that in a first lifting position of the locking sleeve (41), the sliding sleeve (70) is blocked in its first control position (A), wherein the locking elements (42) are retained in an outer radial position, and in a second lifting position of the locking sleeve (41), the sliding sleeve (70) is released and is in its second control position (B), wherein the locking elements (42) are pushed into an inner radial position and retained there by the sliding sleeve (70), and the coupling (10) is **characterized in that** the latching mechanism (43) comprises at least one ball (44) that can alternately engage with corresponding grooves (45) either at the sliding sleeve (70) or the locking sleeve (41).

2. Coupling (10) according to claim 1, in which the latching mechanism (43) comprises at least one groove (46), the depth of which is selected such that the lift of the sliding sleeve (70) between the first and the second control positions (A, B) is blocked.

3. Coupling (10) according to claim 1 or 2, in which the locking elements (42) are designed as circular latching segments arranged radially with respect to the fluid channel (20).

4. Coupling (10) according to one of the preceding claims, in which the securing mechanism (60) comprises securing elements (61) movably arranged radially to the central fluid channel (20) for releasably blocking the valve sleeve (31) against retaining elements (62), wherein the securing elements (61) are movement-coupled with each other via the sliding sleeve (70) and the valve sleeve (31), such that in the first control position (A) of the sliding sleeve (70), the securing elements (61) are detented in an inner radial position at the valve sleeve (31), and the closed valve (30) is blocked, and in the second control position (B) of the sliding sleeve (70), the securing elements (61) are pushed into an outer radial position by the valve sleeve (31), in which the valve sleeve (31) is released and the valve (30) is at least partially opened.

5. Coupling (10) according to claim 4, in which the valve sleeve (31) comprises at least one circumferential step (33) for detenting the securing elements (61).

6. Coupling (10) according to one of the preceding claims, in which the sliding sleeve (70) is movement-coupled with the valve sleeve (31) via at least one control pin (71) guided axially with respect to the central fluid channel (20).

7. Coupling (10) according to claim 6, in which the length of the control pin (71) guided axially with respect to the central fluid channel (20) is dimensioned such that, for locking the locking mechanism (40) and for subsequently unlatching the securing mechanism (60), a displacement distance has to be passed before the valve (30) at least partially opens.

8. Coupling (10) according to claim 6 or 7, in which the at least one control pin (71) guided axially with respect to the fluid channel (20) abuts against the valve sleeve (31) via an annular thrust plate 72.

9. Coupling (10) according to one of the preceding claims, in which the valve (30) is designed such that its opening degree (34) is changeable in response to a change of the pressure of the fluid, so that the valve is only completely opened when the filling pressure is completely built up, but returns to its only partially opened position as the filling pressure decreases or at the residual pressure.

10. Coupling (10) according to one of the preceding claims, in which a spring preload of the valve sleeve (31) is selected such that the valve (30) can only be closed and latched when a fluid pressure is fallen below, by moving the valve sleeve (31) and the sliding sleeve (70).

11. Coupling (10) according to one of the preceding claims, in which a spring preload of the valve sleeve (31) is selected such that the valve (30) can only be opened completely when a fluid pressure is exceeded, and thereby blocks the sliding sleeve (70) by moving the valve sleeve (31) and the sliding sleeve (70).

12. Coupling (10) according to one of the preceding claims, in which the valve (30) is designed such that its opening degree (34) is fixed as of a defined fluid pressure.

13. Coupling (10) according to one of the preceding claims, in which a hand lever mechanism (80) is provided by means of which the sliding sleeve (70) can be transferred from the second position (B) to the first position (A) for uncoupling the coupling (10) from a tank fitting (50).

14. Coupling (10) according to one of the preceding claims, in which a data interface, in particular a manually exchangeable data interface, is provided for providing refueling information.

15. Coupling (10) according to one of the preceding claims, in which an LED display, preferably an OLED color display, is provided for displaying refueling information, in particular concerning a course of the refueling operation.

16. Coupling (10) according to one of the preceding claims, in which a start button for signaling a refueling start request to a dispenser is provided at the coupling (10) itself.

17. Coupling (10) according to one of the preceding claims, in which a gripping region is designed to be cold insulated and preferably with a vacuum insulation.

18. Coupling (10) according to one of the preceding claims, in which the complete mechanism is covered by a continuous plastic cover of a weathering-resistant material.

19. Method of transmitting fluids with a coupling according to one of the preceding claims, in which in a first control position (A) of the sliding sleeve (70), the locking mechanism (40) is unlocked and the valve (30) is closed, and in the transition to a second control position (B) of the sliding sleeve (70), the securing mechanism (60) unlocks the valve sleeve (31), so that the valve (30) is unlatched and at least partially opened, and the valve sleeve (31) is moved against the direction of flow of the fluid by pressurization, wherein the securing mechanism (60) locks the sliding sleeve (70) and the valve (30) opens completely, **characterized in that** for uncoupling the coupling (10) from a tank fitting (50), the pressure of the fluid is lowered, the valve sleeve (31) overcomes a filling pressure of the fluid driven by spring force, and the valve sleeve (31) and the sliding sleeve (70) are then shifted in the direction of flow (D) of the fluid via a hand lever mechanism (80), wherein the valve (30) closes, the securing mechanism (60) blocks the valve sleeve (31) and releases the sliding sleeve (70), and the sliding sleeve 70 is then moved into its first position (A).

20. Method according to claim 19, in which a course of the refueling operation is represented at an LED display of the coupling (10).

21. Method according to one of claims 19 or 20, in which a refueling start request is sent to a dispenser via a start button of the coupling (10).

22. Use of a coupling (10) according to one of claims 1 to 18 for refueling vehicles with gaseous fluids, in particular with hydrogen.

## Revendications

1. Dispositif d'accouplement (10) destiné à transférer des fluides, pourvu d'un canal central à fluide (20) et, disposée au sein de ce dernier, d'une soupape (30) dont le poussoir de soupape (32) est accouplé en mouvement à une douille de soupape (31) laquelle est précontrainte à ressort dans le sens d'écoulement (D) du fluide, et pourvu d'un mécanisme de verrouillage (40) pour le verrouillage libérable du dispositif d'accouplement (10) sur un embout de réservoir (50), et d'un mécanisme de sécurisation (60) pour le blocage libérable de la soupape (30) fermée, le mécanisme de verrouillage (40) et le mécanisme de sécurisation (60) étant accouplés en mouvement par l'intermédiaire d'une douille coulissante (70) qui est précontrainte à ressort à l'encontre du sens d'écoulement (D), faisant en sorte que, dans une première position de commande (A) de la douille coulissante (70), le mécanisme de verrouillage (60) soit déverrouillé et la soupape (30) soit fermée et, dans une deuxième position de commande (B) de la douille de commande (70), le mécanisme de sécurisation (60) vienne déverrouiller la douille de soupape (31) de manière à ce que la soupape (30) soit débloquée et au moins partiellement ouverte, et la douille de soupape (31) pouvant être déplacée, lorsqu'elle est sollicitée en pression, à l'encontre du sens d'écoulement (D) du fluide, le mécanisme de sécurisation (60) venant alors verrouiller la douille coulissante et complètement ouvrir la soupape (30), et chez lequel le mécanisme de verrouillage (40) comprend une douille de verrouillage (41) qui est précontrainte à ressort dans le sens d'écoulement (D) du fluide, des éléments de verrouillage (42) disposés de manière à être radialement mobiles par rapport au canal central à fluide (20) ainsi qu'un mécanisme de blocage (43) pour le blocage libérable de la douille coulissante (70), le mécanisme de blocage (43), la douille coulissante (70) et les éléments de verrouillage (42) étant accouplés en mouvement par l'intermédiaire de la douille de verrouillage (41) de manière à ce que, dans une première position de course de la douille de verrouillage (41), la douille coulissante (70) soit bloquée dans sa première position de commande (A), les éléments de verrouillage (42) étant alors maintenus dans une position radiale extérieure, et la douille coulissante (70) soit, dans une deuxième position de course de la douille de verrouillage (41), libérée et se trouve dans sa deuxième position de commande (B), les éléments de verrouillage (42) étant alors poussés par la douille coulissante (70) dans une position radiale intérieure où ils sont maintenus, et le dispositif d'accouplement (10) étant **caractérisé en ce que** le mécanisme de blocage (43) comprend au moins une bille (44) qui peut alternativement venir en prise avec des rainures (45) correspondantes sur la douille coulissante (70) ou bien sur la douille de verrouillage (41).

2. Dispositif d'accouplement (10) selon la revendication 1, son mécanisme de blocage (43) comprenant au moins une rainure (46) dont la profondeur est choisie de manière à ce que la course de la douille coulissante (70) soit bloquée entre la première et la deuxième positions de commande (A, B).

3. Dispositif d'accouplement (10) selon les revendications 1 ou 2, ses éléments de verrouillage (42) étant réalisés sous forme de segments de blocage circulaires qui sont disposés radialement au canal à fluide (20).

4. Dispositif d'accouplement (10) selon l'une des revendications précédentes, son mécanisme de sécurisation (60) comprenant des éléments de sécurisation (61) qui sont disposés de manière à être radialement mobiles par rapport au canal central à fluide (20) et qui servent au blocage libérable de la douille de soupape (31) par rapport à des éléments de maintien (62), les éléments de sécurisation (61) étant accouplés en mouvement les uns aux autres, par l'intermédiaire de la douille coulissante (70) et la douille de soupape (31), de manière à ce que, dans la première position de commande (A) de la douille coulissante (70),les éléments de sécurisation (61) soient fixés par encliquetage dans une position radiale intérieure sur le douille de soupape (31) et le la soupape (30) fermée soit bloquée, et que, dans la deuxième position de commande (B) de la douille coulissante (70), les éléments de sécurisation (61) soient poussés par la douille de soupape (31) dans une position extérieure radiale dans laquelle la douille de soupape (31) est libérée et la soupape (30) est au moins partiellement ouverte.

5. Dispositif d'accouplement (10) selon la revendication 4, sa douille de soupape (31) comportant au moins un cran circonférentiel (33) permettant de fixer par encliquetage les éléments de sécurisation (61).

6. Dispositif d'accouplement (10) selon l'une des revendications précédentes, sa douille coulissante (70) étant accouplé en mouvement, par l'intermédiaire d'au moins un doigt de commande (71) guidé selon une direction axiale par rapport au canal central à fluide (20), à la douille de soupape (31).

7. Dispositif d'accouplement (10) selon la revendication 6, chez lequel la longueur du doigt de commande (71) guidé selon une direction axiale par rapport au canal central à fluide (20) est dimensionnée de manière à ce que, pour ainsi verrouiller le mécanisme de verrouillage (40) et ensuite débloquer le mécanisme de sécurisation (60), il doive parcourir une distance de décalage avant que la soupape (30) ne soit au moins partiellement ouverte.

8. Dispositif d'accouplement (10) selon les revendications 6 ou 7, chez lequel l'au moins un doigt de commande (71), guidé selon une direction axiale par rapport au canal à fluide (20), repose contre la douille de soupape (31) par l'intermédiaire d'un disque de pression (72) circulaire.

9. Dispositif d'accouplement (10) selon l'une des revendications précédente, chez lequel la soupape (30) est réalisée de manière à ce que sa largeur d'ouverture (34) puisse être variée en fonction d'un changement de pression du fluide, faisant en sorte que ladite soupape ne soit complètement ouverte qu'en cas d'une pression de remplissage qui a atteint sa valeur finale alors qu'elle regagne sa position seulement partiellement ouverte lorsque la pression de remplissage diminue ou il ne persiste qu'une pression résiduelle.

10. Dispositif d'accouplement (10) selon l'une des revendications précédentes, chez lequel une précontrainte à ressort de la douille de soupape (31) est choisie de manière à ce que la soupape (30) puisse être fermée et bloquée, en déplaçant la douille de soupape (31) et la douille coulissante (70), uniquement lorsqu'une pression de fluide n'est plus atteinte.

11. Dispositif d'accouplement (10) selon l'une des revendications précédentes, chez lequel une précontrainte à ressort de la douille de soupape (31) est choisie de manière à ce que uniquement lorsqu'une pression de fluide est dépassée, la soupape (30) puisse être complètement ouverte, en déplaçant la douille de soupape (31) et la douille coulissante (70), pour ainsi bloquer la douille coulissante (70).

12. Dispositif d'accouplement (10) selon l'une des revendications précédentes, chez lequel la soupape (30) est réalisée de manière que sa largeur d'ouverture (34) soit fixée à partir d'une pression de fluide définie.

13. Dispositif d'accouplement (10) selon l'une des revendications précédentes, lequel est pourvu d'une mécanique à poignée (80) permettant de déplacer la douille coulissante (70) depuis la deuxième position (B) dans la première position (A) pour ainsi découpler le dispositif d'accouplement (10) d'un embout de réservoir (50).

14. Dispositif d'accouplement (10) selon l'une des revendications précédentes, lequel est pourvu d'une interface de données, notamment d'une interface de données pouvant être manuellement échangée, afin de fournir des informations de remplissage d'un réservoir.

15. Dispositif d'accouplement (10) selon l'une des revendications précédentes, lequel est pourvu d'un dispositif d'affichage à LED, notamment d'un dispositif d'affichage en couleurs à OLED, pour ainsi afficher des informations de remplissage d'un réservoir, lesquelles concernent plus particulièrement un mode de progression dudit remplissage du réservoir.

16. Dispositif d'accouplement (10) selon l'une des revendications précédentes, le dispositif d'accouplement (10) étant lui-même pourvu d'un bouton de démarrage servant à signaler à une unité de distribution que l'on souhaite démarrer le remplissage d'un réservoir.

17. Dispositif d'accouplement (10) selon l'une des revendications précédentes, chez lequel une zone de poignée est isolée contre le froid et préférablement réalisée de manière à comporter une isolation à vide.

18. Dispositif d'accouplement (10) selon l'une des revendications précédentes, chez lequel l'intégralité de la mécanique est recouverte par une housse continue en matière plastique réalisée en un matériau résistant aux conditions climatiques.

19. Procédé lequel vise à transférer des fluides au moyen d'un dispositif d'accouplement selon l'une des revendications précédentes et dans lequel le mécanisme de verrouillage (40) est déverrouillé et la soupape (30) est fermée lorsque la douille coulissante (70) adopte une première position de commande (A), et le mécanisme de sécurisation (60) déverrouille la douille de soupape (31) lors de la transition vers une deuxième position de commande (B) de la douille coulissante (70), faisant en sorte que la soupape (30) soit débloquée et au moins partiellement ouverte et que la douille de soupape (31) soit déplacée, lorsqu'elle est sollicitée en pression, à l'encontre du sens d'écoulement du fluide, le mécanisme de sécurisation (60) venant alors verrouiller la douille coulissante (70) et complètement ouvrir la soupape (30), **caractérisé en ce que** la pression du fluide est diminuée afin de découpler le dispositif d'accouplement (10) d'un embout de réservoir (50), la douille de soupape (31) peut être entraînée à l'encontre d'une pression de remplissage du fluide par la force élastique pour ensuite déplacer, par l'intermédiaire d'une mécanique à poignée (80), la douille de soupape (31) et la douille coulissante (70) dans le sens d'écoulement (D) du fluide, faisant en sorte que la soupape (30) se ferme, le mécanisme de sécurisation (60) vienne bloquer la douille de soupape (31) et libérer la douille coulissante (70), et la douille coulissante (70) est ensuite déplacée dans sa première position (A).

20. Procédé selon la revendication 19, dans lequel un mode de progression du remplissage d'un réservoir est représenté sur un dispositif d'affichage à LED du dispositif d'accouplement (10).

21. Procédé selon l'une des revendications 19 ou 20, dans lequel une demande de démarrer le remplissage d'un réservoir est envoyée, au moyen d'un bouton de démarrage du dispositif d'accouplement (10), à une unité de distribution.

22. Utilisation d'un dispositif d'accouplement (10) selon l'une des revendications 1 à 18 pour remplir les réservoirs de véhicules avec des fluides gazeux, notamment avec de l'hydrogène.
